# EUROPEAN PATENT SPECIFICATION

(11) **EP 3 017 560 B1**
(45) Date of publication and mention of the grant of the patent: **22.11.2017**
(21) Application number: 13894359.2
(22) Date of filing: 30.09.2013
(51) Int. Cl.: H04L 12/40, H04L 12/64

(54) **A MERGING UNIT**
ZUSAMMENFÜHRUNGSEINHEIT
UNITÉ DE FUSION

(43) Date of publication of application: 11.05.2016
(73) Proprietor: Siemens Aktiengesellschaft, 80333 München (DE)
(72) Inventor: HU, Xi, Beijing 100025 (CN); ZHUO, Yue, Beijing 100084 (CN)
(74) Representative: Isarpatent
(86) International application number: PCT/CN2013/084723
(87) International publication number: WO 2015/042956

(56) References cited:
- EP-A2- 1 491 006
- WO-A1-2012/116761
- CN-A- 102 004 718
- CN-A- 103 278 791
- CN-U- 202 353 572
- US-A1- 2013 077 509
- US-A1- 2013 235 878
- US-B2- 8 036 202

## Description

### Field of the Invention

The present application relates generally to substation automation. In particular, the present application relates to a Merging Unit (MU) in a Substation Automation System (SAS).

### Background

The International Electrotechnical Commission (IEC) 60044-8 defines a MUt as an interface to current or voltage transformers. The MU is used to collect and process data sampled from the current transformer (CT) and/or voltage transformer (VT) and foreward the data to further equipment over an optical fibre transmission system. In Merging Unit (MU), there is always an interface for system configuration, testing and on-line diagnosis, such as RS232, RS485, USB, Ethernet etc. At present, in most of the existing MU, there is a dedicated interface (e.g., a dedicated Ethernet fiber interface) for system configuration, testing and on-line diagnosis. However, a dedicated interface will adds cost to MU.

IEEE 1588 over a fiber link becomes more popular for synchronizing MU to an external grandmaster clock. The IEEE 1588 link is not a point to point connection and has no heavy communication load as the Sampling Measurement Values transmission channel.

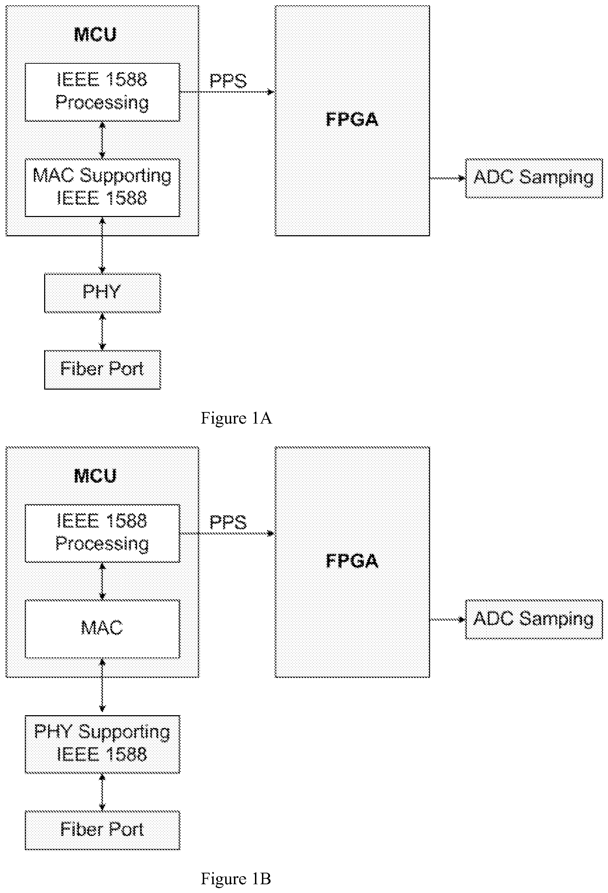

Figure 1A shows the timing process of IEEE 1588 in a traditional MU, in which IEEE 1588 communication shares an Ethernet port with a different kind of communication. Most of the existing MUs are implemented based on a Field Programmable Gate Array chip (hereafter referred to as "FPGA") and one or more microcontroller units (hereafter referred to as "MCU"), where the core modules of the MU are implemented in FPGA and other functional modules are built on peripheral MCUs. As shown in FIG.1A, the IEEE 1588 protocol stack is implemented in a MCU (Microcontroller Unit), which has a built-on Medium Access Controller (MAC) supporting IEEE 1588. The MAC forwards the IEEE 1588 packets received from a fiber port (also referred to as "FO") to the IEEE 1588 processing module on the MCU, which processes these packets and generates a Pulse-Per-Second (PPS) signal and transmits this signal to the FPGA for MU time synchronization. The basic function modules of the MU such as reception, process and transmission of sampled values are implemented in the FPGA.
Figure 1B shows the timing process of IEEE 1588 in another traditional Merging Unit. The IEEE 1588 protocol stack is implemented in a MCU, on which there is a normal MAC connected to an external physical layer transceiver (hereafter referred to as "PHY") supporting IEEE 1588. The PHY forwards the IEEE 1588 packets received from a fiber port to the IEEE 1588 processing module in the MCU, which processes these packets and generates the PPS signal.
In the two Merging Units shown in Fig.1A and Fig.1B, the IEEE 1588 link can share an Ethernet port with communications with other purposes. EP 1491006 A2 discloses an Ethernet industrial control system for robot application comprising a reduced UDP-IP stack for placing message having higher priority identifier, to serial network bus, before placing message with less priority identifier.

WO 2012/116761 A1 discloses a method for scheduling use of output path shared by queues of variable length packets at node of telecommunication network that involves utilizing shared output path for outputting delay sensitive packet during free interval.

### Summary

The present invention is defined in the appended independent claim 1 to which reference should be made. Advantageous features are set out in the appended dependent claims. The details of various embodiments of the invention are set forth in the accompanying drawings and the description below.

### Brief Description of the Drawings

The foregoing and other objects, aspects, features, and advantages of the disclosure will become more apparent and better understood by referring to the following description taken in conjunction with the accompanying drawings, in which:
FIG. 1A illustrates an embodiment of the timing process of IEEE 1588 in a traditional Merging Unit;
FIG. 1B illustrates another embodiment of the timing process of IEEE 1588 in a traditional Merging Unit;
FIG. 2 illustrates an exemplary timing process of IEEE 1588 in the Merging Unit according to embodiments of the invention
FIG. 3 illustrates a block diagram of an exemplary Merging Unit according to embodiments of the invention;
FIG. 4 illustrates a block diagram of an exemplary PHY in the Merging Unit according to embodiments of the invention.

### Embodiments

The Merging Unit is illustrated by way of examples and not by way of limitation in the figures of the accompanying drawings in which like references indicate similar elements. It should be noted that references to "an" or "one" or "some" embodiment(s) in this disclosure are not necessarily to the same embodiment, and such references mean at least one.

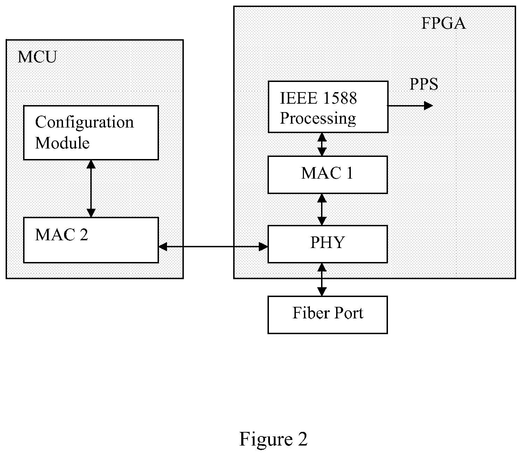

FIG. 2 illustrates an exemplary timing process of IEEE 1588 in the Merging Unit according to an embodiment of the invention. The Merging Unit has a medium access controller MAC 1 and a physical layer transceiver PHY implemented in a FPGA chip. The PHY may simultaneously forward the data received from one Ethernet port such as one fiber port to MAC 1 and another medium access controller (referred to herein as "MAC 2"), and may transmit through the same fiber port, packets from the MAC 1 and the MAC 2. MAC 1 is configured to identify and forward IEEE 1588 packets to and from a IEEE 1588 processing module, and thus can also be referred to herein as "IEEE 1588 MAC". The IEEE 1588 processing module provides the synchronized timing information for the MU based on the IEEE 1588 packets from MAC 1. MAC 2 may transmit packets for other purposes than IEEE 1588 packets. MAC 2 may be bulit on a MCU. In an embodiment, the MCU may be a standalone chip with a low cost. In another embodiment, the MCU may be implemented in the FPGA chip, such as a soft IP core(SOC) in the FPGA chip. A single SOC based on FPGA is easy for production and maintenance. The interfaces between the PHY and the two MACs may be MII, RMII or GMII. In the MU shown in Fig.2, the IEEE 1588 communication can share an Ethernet fiber port with communications for other purposes, which simplifies the hardware design, improves the reliability and reduces the material cost of the merging unit.

In some embodiments, to achieve higher time synchronization precision, the packets from MAC 1 have higher priority than the packets from MAC 2, and will be sent first. For example, the physical layer transceiver (PHY) may be configured with two transmission FIFO buffers, Tx FIFO 1 and Tx FIFO 2, which store packets from the MAC 1 and the MAC 2 respectively. The packets in Tx FIFO 1 will be transmitted first so that IEEE 1588 packets can be processed in real time.

In some embodiments, the IEEE 1588 processing module may be implemented in the FPGA chip. Implementation of the IEEE 1588 protocol with FPGA can guarantee time synchronization precision within ±1 us.

Further referring to Figure 2, in some embodiments, the information on the configuration, test and/or on-line diagnosis of the MU can also be transmitted through the fiber port between the MU and users which is used to transmit the IEEE 1588 packets. As shown in Fig.2, a configuration module may be implemented on the MCU on which the MAC 2 is built. The configuration module is used for users to configure, test and/or online diagnose the MU. As discussed above, the MCU may be a low cost standalone chip or may be implemented in the FPGA chip. For example, the MCU is a soft core implemented in the FPGA chip. The system configuration parameters input by the users are received by the configuration module via the fiber port, and then used to configure the function modules through the interface between the MCU and the FPGA chip. The interface between MCU and FPGA may be IIC, SPI or 8/16/32 data bus, etc. The test result and/or the system status are retrieved from the MU modules through the interface (IIC, SPI or 8/16/32 data bus) and are sent out to the users through the fiber port. a single Ethernet fiber link is, therefore, shared for IEEE 1588 time synchronization and MU system configuration, testing, and online diagnosis. This simplifies the hardware design, improves the reliability and reduces the material cost of the merging unit.

In some embodiments, the configuration module may be an embedded web server which provides web pages for users to configure test and online diagnose the merging unit. The PHY may receive system configuration parameters for the merging unit input by users on the web pages through the fiber port, and transmit information (e.g. the test result and/or the system status) retrieved from the merging unit for displaying to users on the web pages through the fiber port. The web server can be easily implemented based on the operating system running on the MCU which the MAC 2 is built on. The web-based user interface for MU system configuration, testing and online diagnosis, is more friendly and convenient than the conventional engineering tools installed on personal computers or laptops.

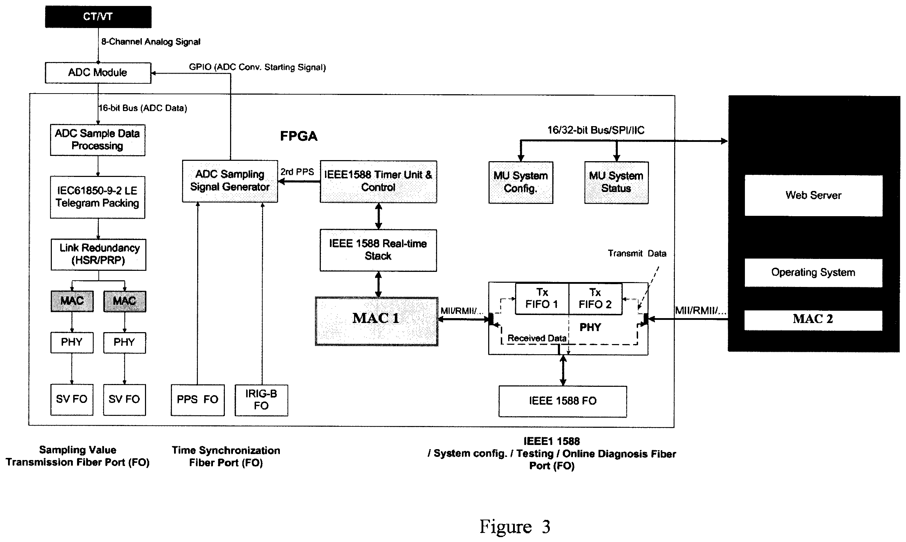

Refer now to Figure 3, which illustrates a block diagram of an exemplary Merging Unit according to an embodiment of the invention. In the MU, the IEEE1588 fiber link is shared with MU system configuration, testing and on-line diagnosis. As shown in Fig.3, PPS FO, IRIG-B(Inter Range Instrumentation Group-B standard) FO and IEEE 1588 FO may be used to time synchronization with an external grandmaster clock. Due to the benefit of precise time synchronization over Ethernet network, IEEE 1588 is becoming the mainstream technology for precise time synchronization. Besides time synchronization, IEEE 1588 FO is also used as the interface for web based user interaction, such as MU system configuration, testing and/or on-line diagnosis. A PHY compliant with IEEE 802.3 is implemented in FPGA, which simultaneously forwards the data received from the IEEE 1588 FO to MAC 1 and MAC 2. The PHY is configured with two transmission FIFO buffers, Tx FIFO 1 and Tx FIFO 2, which store packets from MAC 1 and MAC 2 respectively. To achieve higher time synchronization precision, the packets in Tx FIFO 1 from MAC 1 have higher priority than the packets in Tx FIFO 2 from MAC 2, and will be transmitted first via IEEE 1588 FO.

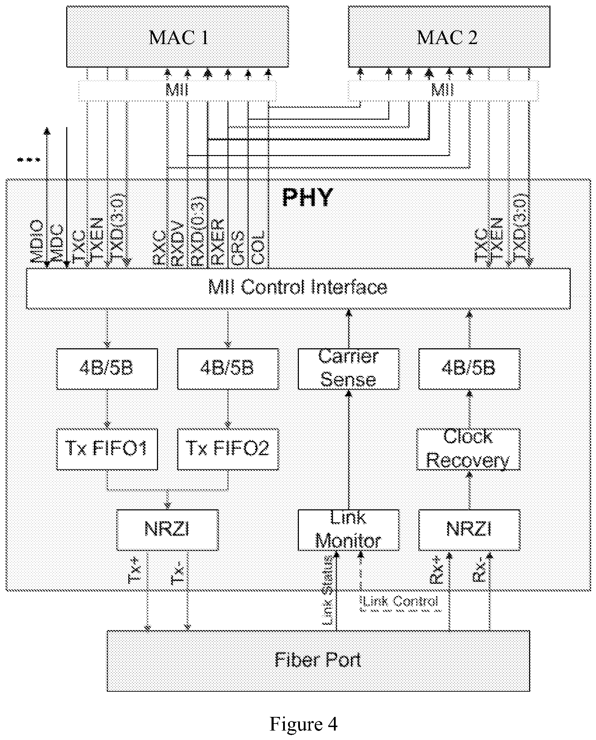

Figure 4 illustrates a block diagram of an exemplary PHY in the MU according to an embodiment of the invention. In the example, the interface between the PHY and the two MACs is MII. In other implementations, it can be MII, RMII, or GMII and etc. Whenever the PHY receives data from the fiber port, it simultaneously forwards the received data to MAC 1 and MAC 2 via the receiving interfaces (RXD, RXDV, RXER, RXC) in MII between the two MACs. The packets received from MAC 1 via the transmitting interfaces (TXC, TXEN, TXD) in MII are saved in Tx FIFO 1. Also, the packets received from MAC 2 are stored in Tx FIFO 2. The packets in Tx FIFO 1 are transmitted first via the fibre port.

Further referring to Figure 3, MAC 1 is configured to identify and forward IEEE 1588 packets to and from IEEE 1588 Real-time Stack module. Besides the normal functions provided by a MAC, MAC 1 can monitor event messages with IEEE 1588 version 1 and version 2. Upon detection of such event message, MAC 1 will capture the transmission, receive the timestamp and provide the timestamp value to IEEE 1588 Real-time Stack module. In some embodiments, MAC 1 may be realized based on a 3^{rd} party IP core. IEEE 1588 Real-time Stack module implements the IEEE 1588 V1 and V2 protocols, and updates the IEEE 1588 clock in the IEEE 1588 Timer Unit and Control module based on the results of the synchronization protocol. The other packets except IEEE 1588 packets received from MAC 1 are directly filtered by IEEE 1588 Real-time Stack. The IEEE 1588 Timer Unit and Control module provides the synchronized time information to MU system, and generates the Pulse-Per-Second (PPS) to the ADC Sampling Signal Generator, which outputs the ADC sampling signal to control ADC sampling. The IEEE 1588 Real-time Stack module and IEEE 1588 Timer Unit and Control module are implemented in the FPGA chip to ensure the time synchronization precision.

As shown in figure 3, the sampled data from CT/VT are converted from analog signals to digital signals by ADC (Analog to Digital Converter) module, processed by the ADC Sample Data Processing module, packaged by IEC61850-9-2 LE Telegram Packing module and transimitted over Ethernet fiber links. In figure 3, two fiber ports, which can be referred to as Sampling Value Transmission Fiber Port(SV FO), are used to transmit the CT/VT sampling values with IEC 61850-9-2 or IEC 61850-9-2 LE protocol. To guarantee the time delay between analog sampling and telegram output (1.5ms - 2 ms) and sampling time synchronization with Pulse Per Second (PPS) accuracy within ±1 us, the IEC 61850-9-2 or IEC 61850-9-2 LE protocol and sampling signal generation are implemented in a FPGA chip, such as Altera Cyclone series.

As mentioned above, MAC 2 may transmit communication packages for other purposes than IEEE 1588 communication. In this example, an embedded web server is implemented based on the OS running on the MCU, which provides web pages for users to configure, test and online diagnose the MU. The system configuration parameters input by users on the web pages will be posted to the web server, and then used to configure the function modules through the interface between the MCU and the FPGA chip. The interface can be IIC, SPI or 8/16/32 data bus, etc. Users can online test and diagnose the MU system through the web pages. The test result and/or the system status are retrieved from the MU modules through the interface such as IIC, SPI or 8/16/32 data bus, and are transmitted via IEEE 1588 FO to be displayed to the user on the web pages. The IEEE 1588 packets received from MAC 2 are filtered by MAC 2 driver. The MCU can be a standalone chip or a soft IP core implemented in the FPGA chip.

Although the above embodiments of the invention have been illustrated by taking the IEEE 1588 protocol and Fiber Port as examples, it should be appreciated that other time synchronism protocols over Ethernet and Ethenet port can be used in embodiments of the invention. As apparent from the discussion above, the merging unit according to embodiments of the invention can share the IEEE 1588 fiber link with MU system configuration, testing and on-line diagnosis, and guarantee time synchronization precision within ±1 us. While certain embodiments of the merging unit have been described, these embodiments are exemplary and in no way limit the scope of the described methods or systems. Those having skill in the relevant art can effect changes to form and details of the described merging unit without departing from the broadest scope of the invention. Thus, the scope of the present disclosure described herein should not be limited by any of the exemplary embodiments and should be defined in accordance with the accompanying claims and their equivalents.

## Claims

1. A merging unit, comprising:
a first medium access controller (MAC1), a second medium access controller (MAC2), a physical layer transceiver (PHY) and an Ethernet port;
wherein the first medium access controller is configured to identify and forward IEEE 1588 packets carrying synchronized timing information; the physical layer transceiver is configured to forward data received from the Ethernet port to the first medium access controller and the second medium access controller, and to transmit through the Ethernet port, packets from the first medium access controller and the second medium access controller;
the IEEE 1588 packets from the first medium access controller have higher priority than the packets from the second medium access controller; and
wherein the first medium access controller and the physical layer transceiver are implemented in a field programmable gate array, FPGA, chip; wherein
the second medium access controller (MAC2) is configured to transmit packets for other purposes than 1588 packets;
the second medium access controller (MAC2) is built on a microcontroller unit; and
the microcontroller unit is a standalone chip.

2. The merging unit of claim 1, wherein the physical layer transceiver is configured with a first FIFO buffer and a second FIFO buffer, which store packets from the first medium access controller and the second medium access controller respectively.

3. The merging unit of claim 1, further comprises an IEEE 1588 processing module for providing the synchronized timing information based on the packets received from the first medium access controller.

4. The merging unit of claim 3, wherein the IEEE 1588 processing module is implemented in the field programmable gate array chip.

5. The merging unit of claim 1, further comprises a configuration module implemented on the microcontroller unit which is used to configure, test or online diagnose the merging unit.

6. The merging unit of claim 5, wherein the configuration module is an embedded web server which provides web pages for users to configure, test and online diagnose the merging unit.

7. The merging unit of claim 6, wherein the physical layer transceiver receives from the Ethernet port, configuration parameters for the merging unit input by users on the web pages, and transmits through the Ethernet port, information retrieved from the merging unit for displaying to users on the web pages.

8. The merging unit of any of claims 1-7, wherein the Ethernet port is a fiber port.

## Patentansprüche

1. Zusammenführungseinheit, umfassend:
eine erste Medienzugriffssteuerung (MAC1), eine zweite Medienzugriffssteuerung (MAC2), einen Transceiver der physikalischen Schicht (PHY) und einen Ethernetanschluss;
wobei die erste Medienzugriffssteuerung konfiguriert ist, IEEE-1588-Pakete, die synchronisierte Taktungsinformationen tragen, zu identifizieren und weiterzuleiten;
wobei der Transceiver der physikalischen Schicht konfiguriert ist, von dem Ethernetanschluss empfangene Daten an die erste Medienzugriffssteuerung und die zweite Medienzugriffssteuerung weiterzuleiten und Pakete von der ersten Medienzugriffssteuerung und der zweiten Medienzugriffssteuerung durch den Ethernetanschluss zu übertragen;
wobei die IEEE-1588-Pakete von der ersten Medienzugriffssteuerung eine höhere Priorität als die Pakete von der zweiten Medienzugriffssteuerung aufweisen; und
wobei die erste Medienzugriffssteuerung und der Transceiver der physikalischen Schicht in einem Chip einer feldprogrammierbaren Gate-Anordnung, FPGA, implementiert sind; wobei
die zweite Medienzugriffssteuerung (MAC2) konfiguriert ist, Pakete für andere Zwecke als 1588-Pakete zu übertragen;
die zweite Medienzugriffssteuerung (MAC2) auf einer Mikrosteuerungseinheit gebaut ist; und
die Mikrosteuerungseinheit ein unabhängiger Chip ist.

2. Zusammenführungseinheit nach Anspruch 1, wobei der Transceiver der physikalischen Schicht mit einem ersten FIFO-Zwischenspeicher und einem zweiten FIFO-Zwischenspeicher konfiguriert ist, die Pakete von der ersten Medienzugriffssteuerung bzw. der zweiten Medienzugriffssteuerung speichern.

3. Zusammenführungseinheit nach Anspruch 1, ferner umfassend ein IEEE-1588-Verarbeitungsmodul zum Bereitstellen der synchronisierten Taktungsinformationen basierend auf den von der ersten Medienzugriffssteuerung empfangenen Paketen.

4. Zusammenführungseinheit nach Anspruch 3, wobei das IEEE-1588-Verarbeitungsmodul in dem Chip der feldprogrammierbaren Gate-Anordnung implementiert ist.

5. Zusammenführungseinheit nach Anspruch 1, ferner umfassend ein auf der Mikrosteuerungseinheit implementiertes Konfigurationsmodul, das zum Konfigurieren, Testen oder Online-Diagnostizieren der Zusammenführungseinheit verwendet wird.

6. Zusammenführungseinheit nach Anspruch 5, wobei das Konfigurationsmodul ein eingebetteter Webserver ist, der Webseiten für Benutzer zum Konfigurieren, Testen und Online-Diagnostizieren der Zusammenführungseinheit bereitstellt.

7. Zusammenführungseinheit nach Anspruch 6, wobei der Transceiver der physikalischen Schicht durch Benutzer auf den Webseiten eingegebene Konfigurationsparameter für die Zusammenführungseinheit von dem Ethernetanschluss empfängt und von der Zusammenführungseinheit abgerufene Informationen zur Anzeige für Benutzer auf den Webseiten durch den Ethernetanschluss überträgt.

8. Zusammenführungseinheit nach einem der Ansprüche 1-7, wobei der Ethernetanschluss ein Faseranschluss ist.

## Revendications

1. Unité de fusion, comprenant :
un premier contrôleur d'accès au support (MAC1), un second contrôleur d'accès au support (MAC2), un émetteur-récepteur de couche physique (PHY) et un port Ethernet ;
où le premier contrôleur d'accès au support est configuré pour identifier et transmettre des paquets IEEE 1588 acheminant des informations de timing synchronisées ;
l'émetteur-récepteur de couche physique est configuré pour transmettre des données reçues depuis le port Ethernet au premier contrôleur d'accès au support et au second contrôleur d'accès au support, et pour transmettre, par l'intermédiaire du port Ethernet, des paquets provenant du premier contrôleur d'accès au support et du second contrôleur d'accès au support ; les paquets IEEE 1588 provenant du premier contrôleur d'accès au support ont une priorité supérieure à celle des paquets provenant du second contrôleur d'accès au support ; et
où le premier contrôleur d'accès au support et l'émetteur-récepteur de couche physique sont mis en oeuvre dans une puce de réseau prédiffusé programmable par l'utilisateur, FPGA ; où le second contrôleur d'accès au support (MAC2) est configuré pour transmettre des paquets pour d'autres buts que les paquets 1588 ;
le second contrôleur d'accès au support (MAC2) est construit sur une unité de microcontrôleur ; et
l'unité de microcontrôleur est une puce autonome.

2. Unité de fusion selon la revendication 1, dans laquelle l'émetteur-récepteur de couche physique est configuré avec un premier tampon de type FIFO et un second tampon de type FIFO, qui stockent les paquets provenant respectivement du premier contrôleur d'accès au support et du second contrôleur d'accès au support.

3. Unité de fusion selon la revendication 1, comprenant en outre un module de traitement IEEE 1588 pour fournir les informations de timing synchronisées sur la base des paquets reçus du premier contrôleur d'accès au support.

4. Unité de fusion selon la revendication 3, dans laquelle le module de traitement IEEE 1588 est mis en oeuvre dans la puce de réseau prédiffusé programmable par l'utilisateur.

5. Unité de fusion selon la revendication 1, comprenant en outre un module de configuration mis en oeuvre sur l'unité de microcontrôleur, qui est utilisé pour configurer, tester ou diagnostiquer en ligne l'unité de fusion.

6. Unité de fusion selon la revendication 5, dans laquelle le module de configuration est un serveur Web intégré qui fournit des pages Web à des utilisateurs pour configurer, tester et diagnostiquer en ligne l'unité de fusion.

7. Unité de fusion selon la revendication 6, dans laquelle l'émetteur-récepteur de couche physique reçoit du port Ethernet des paramètres de configuration pour l'unité de fusion entrés par des utilisateurs sur les pages Web, et transmet, par l'intermédiaire du port Ethernet, les informations récupérées depuis l'unité de fusion pour un affichage à l'intention des utilisateurs sur les pages Web.

8. Unité de fusion selon l'une quelconque des revendications 1 à 7, dans laquelle le port Ethernet est un port à fibre.
